# EUROPÄISCHE PATENTANMELDUNG

(11) **EP 1 098 417 A1**
(43) Veröffentlichungstag der Anmeldung: **09.05.2001**
(21) Anmeldenummer: 00123076.2
(22) Anmeldetag: 24.10.2000
(51) Int. Cl.: H02H 7/085, E06B 9/68

(54) **Elektrischer Antrieb**

(30) Priorität: 03.11.1999 DE 19953066
(71) Anmelder: GEZE GmbH, 71229 Leonberg (DE)
(72) Erfinder: Habicht, Olaf, 73431 Aalen (DE); Bonilla-Lück, Roberto, 70825 Korntal-Münchingen (DE); Hahn, Erhard, 71379 Leutenbach (DE); Zimmerle, Eugen, 73579 Schechingen (DE)

(57) **Zusammenfassung**

Gezeigt wird ein elektrischer Antrieb (2) für einen an einem ortsfesten Rahmen gelagerten Flügel, insbesondere Kipp- oder Klappflügel, z.B. in einer Lüftungsanlage, Rauch- und Wärmeabzugsanlage oder dergleichen, mit einem Antriebsgehäuse (3, 103), in welchem ein elektrischer Motor (4, 104) mit Schubabtriebsglied (5, 109) gelagert ist. Das Antriebsgehäuse (3, 103) ist am Flügel oder am ortsfesten Rahmen abgestützt. Das Schubabtriebsglied (5, 109) ist am ortsfesten Rahmen bzw. am Flügel abgestützt.

Es ist ein Schalter vorgesehen, der ein erstes Schalterelement (31, 131) aufweist, das über eine elektrische Verbindung mit dem Motor (4, 104) oder einer mit dem Motor (4, 104) verbundenen elektrischen Steuerungseinrichtung verbunden ist, und ein zweites Schalterelement (33, 133) aufweist, das mit dem ersten Schalterelement (31, 131) zusammenwirkt. Das erste Schalterelement (31, 131) ist am oder in dem Antriebsgehäuse (3, 103) anbringbar. Das zweite Schalterelement (33, 133) ist an oder in dem Schubabtriebsglied (5, 109) oder einem mit dem Schubabtriebsglied (5, 109) verbundenen Teil angeordnet.

## Beschreibung

Die Erfindung betrifft einen elektrischen Antrieb für einen an einem ortsfesten Rahmen gelagerten Flügel, insbesondere Kipp- oder Klappflügel, z.B. in einer Lüftungsanlage, Rauch- und Wärmeabzugsanlage oder dergleichen, mit den Merkmalen des Oberbegriffs des Anspruchs 1.

Aus DE 91 14 596 U1 ist ein Elektromotor für Stellantriebe für Fenster oder Türen mit Überlastabschaltung bekannt. Er weist einen Mikrocomputer zur Steuerung des Antriebs mit einer Inkrementalwegerfassung mit Istwert-Anzeige auf. Es ist eine Abschaltvorrichtung vorhanden, mit der eine Hubbegrenzung gewährleistet wird.

Die DE 195 14 229 A1 beschreibt einen Elektromotor mit einer Rutschkupplung als Lastabschaltvorrichtung. Bei einer Überlast dreht sich der Motor innerhalb des Gehäuses und betätigt dadurch einen Schalter, der den Motor abschaltet.

Bei diesen bekannten Antrieben sind die Lastabschaltvorrichtungen werkseitig fest eingebaut. Es besteht keine Nachrüstmöglichkeit für Antriebe, die ohne Lastabschaltvorrichtung ausgeliefert wurden.

Der Erfindung liegt die Aufgabe zugrunde, einen Antrieb der eingangs genannten Art zu schaffen, bei dem ein Schalter einfach nachrüstbar oder einstellbar ist.

Die Aufgabe wird erfindungsgemäß gelöst durch den Gegenstand des Anspruchs 1.

Der Schalter weist ein erstes elektrisches Schalterelement auf, das über eine elektrische Verbindung mit dem Motor oder einer mit dem Motor verbundenen Steuerungseinrichtung verbunden ist, und ein zweites Schalterelement, das mit dem elektrischen Schalterelement zusammenwirkt. Dies bedeutet, dass das erste Schalterelement eine elektrische Verbindung benötigt, wobei dies beim zweiten Schalterelement verzichtbar ist. Der Schalter mit der elektrischen Verbindung wird vorzugsweise am oder in dem Antriebsgehäuse angeordnet, d.h. vorzugsweise von außen her zugänglich. Das zweite Schalterelement, bei dem die elektrische Verbindung verzichtbar ist, wird vorzugsweise an oder in dem Schubabtriebsglied oder einem damit verbundenen Teil angeordnet. Dieses zweite Schalterelement muss also nicht unbedingt von außen her zugänglich angeordnet werden. Wenn zumindest ein Schalterelement von außen her zugänglich ist, ist eine nachträgliche Einstellung der Position des Schalters ohne weiteres möglich. Auch eine Nachrüstung ist ohne weiteres möglich, wenn z.B. das nicht ohne weiteres zugängliche zweite Schalterelement bereits standardmäßig eingebaut ist. Der Schalter kann als berührungslos arbeitender Schalter ausgebildet sein, z.B. als Reedschalter mit einem Reedelement und einem Permanentmagneten oder als Hallschalter mit einem Hallelement und Permanentmagneten oder als Feldplattenschalter mit einer Feldplatte und einem Permanentmagneten. Ferner kann der Schalter auch als berührend arbeitender Schalter ausgebildet sein mit einem elektrischen Schalterelement und einem mechanischen Betätigungsschalterelement.

Alternativ zu den Schaltern, bei denen das erste Schalterelement als elektrisches Schalterelement mit elektrischer Zuleitung und das zweite Schalterelement als Schalterelement ohne elektrische Zuleitung ausgebildet ist, kann auch ein Schalter eingesetzt werden, bei dem sowohl das erste Schalterelement als auch das zweite Schalterelement als elektrisches Schalterelement mit elektrischer Zuleitung ausgebildet ist.

Der Antriebsmotor kann als Schubstangenantrieb oder als Kettenantrieb ausgebildet sein. Im Falle des Schubstangenantriebs treibt die Motorabtriebswelle eine im Antriebsgehäuse axial fest gelagerte Spindel an, auf der eine Spindelmutter linear geführt ist. Mit der Spindelmutter ist die Schubstange verbunden. Im Falle des Kettenantriebs treibt die Motorabtriebswelle über ein Ritzel das schubabtriebsgliedbildende Kette an. Das erste Schalterelement mit der elektrischen Zuleitung wird vorzugsweise an oder im Antriebsgehäuse und das zweite Schalterelement vorzugsweise an oder in dem Schubabtriebsglied angeordnet. Im Falle des Spindelantriebs wird das zweite Schalterelement vorzugsweise in oder an der Spindelmutter und im Falle des Kettenantriebs in oder an der Kette angeordnet. Zur variablen Einstellung des Schalters kann vorgesehen sein, dass das erste antriebsgehäuseseitige Schalterelement in seiner Position variabel einstellbar ist oder das das schubabtriebsseitige zweite Schalterelement in seiner Position variabel einstellbar ist.

Der Schalter kann als Hubbegrenzungseinrichtung oder als Bestandteil einer Hubbegrenzungseinrichtung ausgebildet sein. Zusätzlich oder alternativ kann der Schalter als Positionsanzeigeeinrichtung oder als Bestandteil einer Positionsanzeigeeinrichtung ausgebildet sein. Die Positionsanzeigeeinrichtung kann entfernt vom Antriebsmotor in einer Steuerungszentrale oder Gebäudeleitzentrale angeordnet sein. Es können auch mehrere Schalter vorgesehen sein, z.B. kann ein Schalter dem Öffnungsvorgang und ein Schalter dem Schließvorgang zugeordnet sein.

Ferner kann ein erstes Schalterelement mit mehreren zweiten Schalterelementen zusammenwirkend eingesetzt werden. Die zweiten Schalterelemente können so angeordnet werden, dass sie entlang der Bewegungsrichtung des Schubabtriebsglieds hintereinander angeordnet sind und somit beim Betrieb des Antriebs zeitlich versetzt nacheinander schalten.

Weitere Merkmale und Vorteile ergeben sich aus der nachfolgenden Beschreibung, in der ein Ausführungsbeispiel in Verbindung mit den Figuren erläutert wird.

Dabei zeigt:
- **Figur 1**: einen Längsschnitt eines Spindelantriebs im Bereich des Antriebsgehäuses;
- **Figur 2**: einen Schnitt entlang Linie I-I in Figur 1 mit in einer Aufnahmenut des Antriebsgehäuses angeordnetem Halterungsglied mit Reedschalter;
- **Figur 3**: eine Draufsicht auf das in der Nut festgeklemmte Schalterelement;
- **Figur 4**: einen Längsschnitt eines Kettenantriebs mit einem in der Kette eingesetzten Schalterelement zur Betätigung zweier wahlweise einschaltbarer Reedschalter.

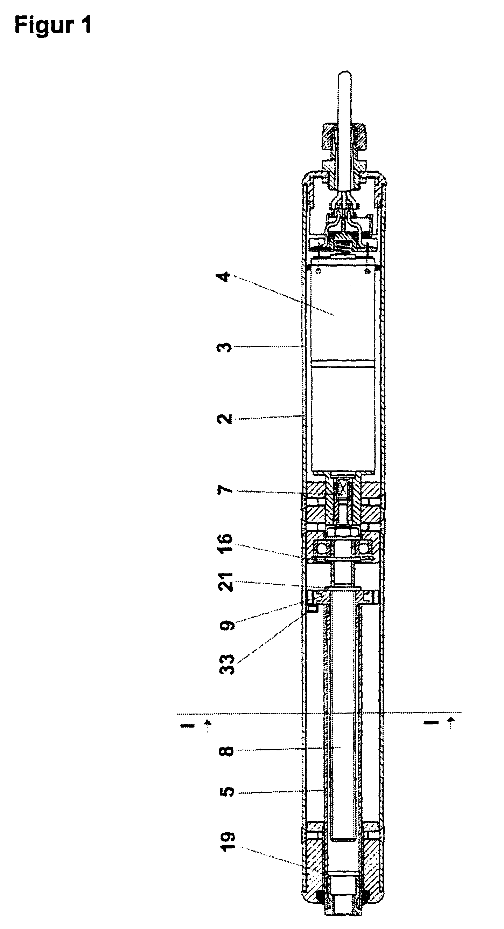

Bei dem in **Figur 1** dargestellten Antrieb 2 handelt es sich um einen sogenannten Spindelmotor. Die Abtriebswelle 7 des Elektromotors 4 ist mit einer in dem Antriebsgehäuse 3 drehbar, aber axial unverschiebbar gelagerten Spindel 8 drehfest gekoppelt. Die Spindel 8 trägt eine Spindelmutter 9, die in dem Antriebsgehäuse 3 undrehbar, aber axial verschiebbar geführt ist. Mit der Spindelmutter 9 ist die als Rohr ausgebildete Schubstange 5 starr verbunden.

Der Elektromotor 4 ist in dem dargestellten Ausführungsbeispiel in dem Antriebsgehäuse 3 über eine in Figur 1 nicht dargestellte zwischengeschaltete Rutschkupplung gelagert. Die Rutschkupplung funktioniert derart, dass bei Blockierung der Abtriebswelle 7, zum Beispiel wenn der Flügel auf ein Hindernis oder einen Anschlag aufläuft, der Flügel über den Elektromotor 4 nicht weiter beaufschlagt wird, sondern sich die Kupplung zwischen dem Elektromotor 4 und dem Antriebsgehäuse 3 löst und der Elektromotor 4 in dem Antriebsgehäuse 3 um die Abtriebswelle 7 dreht und dabei im Antriebsgehäuse 3 angebrachte, in Figur 1 nicht dargestellte Endschalter betätigt und sich selbst abschaltet.

Wenn die Abtriebswelle 7 des Elektromotors 4 dreht, wird die über die Kupplungsbuchse 16 drehfest gekuppelte Spindel 8 mitgedreht. Dabei wandert die auf der Spindel sitzende im Antriebsgehäuse 3 drehfeste Spindelmutter 9 linear auf der Spindel 8. Bei Drehung der Spindel 5 im Uhrzeigersinn wandert die Spindelmutter 9 in der Darstellung in Figur 1 nach links, bei Drehung im Gegenuhrzeigersinn nach rechts. Die mit der Spindelmutter 9 starr verbundene rohrförmige Schubstange 5 wird dabei aus dem Antriebsgehäuse 3 heraus- bzw. in das Antriebsgehäuse 3 hineingeschoben.

Die Schubstange 5 wird dabei in einem am linken Stirnende des Antriebsgehäuses 3 verschraubten Schiebelager 19 geführt. Das Schiebelager 19 bildet gleichzeitig den linken Endanschlag für die Spindelmutter 9. Den rechten Endanschlag für die Spindelmutter 9 bildet eine Anschlagscheibe 21, die auf die Spindel 8 axial fest aufgesteckt ist und in Anschlag mit der Kupplungsbuchse 16 an dem der Spindelmutter 9 zugewandten Stirnende der Kupplungsbuchse 16 steht. An der Spindelmutter 9 ist ein innenliegendes Schalterelement 33 bereits werksseitig angebracht. Es ist als Permanentmagnet ausgebildet. Der Schalter ist ein Reedschalter.

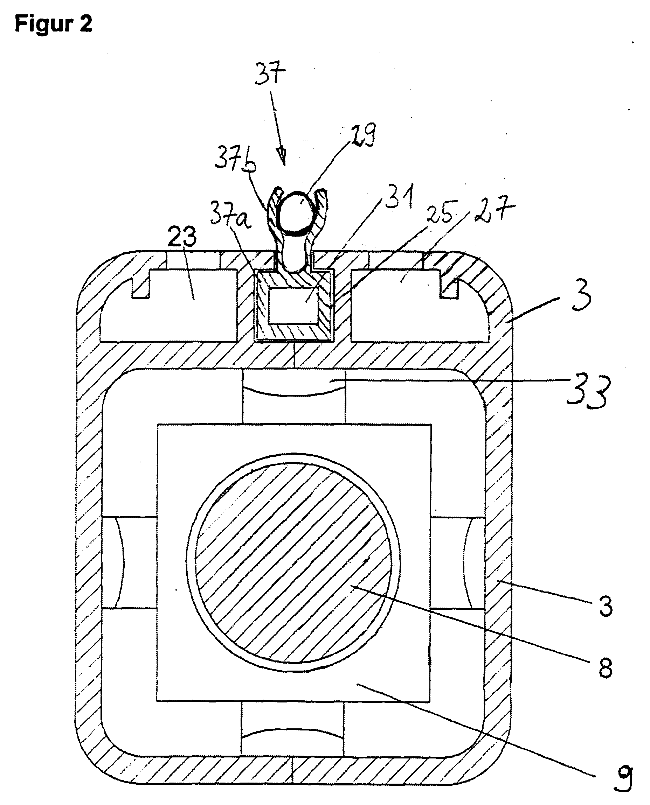

**Figur 2** zeigt das Ausführungsbeispiel in einer Schnittdarstellung entlang Linie I-I in Figur 1. Das Antriebsgehäuse 3 besteht aus einem Aluminium-Hohlprofil mit rechteckigem, fast quadratischem Vierkantquerschnitt. Die Befestigung des Antriebsgehäuses 3 erfolgt über eine nicht dargestellte Klemmverbindung. Die Klemmverbindung besteht aus Klemmschrauben, die mit Nutensteinen verschraubt sind, welche in hinterschnittenen Kanälen in der Außenwand des Antriebsgehäuses 3 eingeschoben sind. Das Antriebsgehäuse 3 weist drei parallele längsverlaufende hinterschnittene, als Nut ausgebildete Kanäle 23, 25, 27 auf. Die Kanäle 23, 27 sind im Querschnitt T-förmig und dienen zur Aufnahme von Nutensteinen zur Befestigung des Antriebsgehäuses 3 am Flügel oder an einem ortsfesten Rahmen. Die Nutensteine sind als mutterartige Vierkantscheiben ausgebildet. Die Kantenlänge der Nutensteine ist etwas geringer als die Breite der Kanäle 23, 27. Die Kanäle 23, 27 sind am Antriebsgehäuse 3 durchlaufend, so dass die Befestigungsposition des Antriebsgehäuses 3 in Längsrichtung stufenlos einstellbar ist. Zwischen den beiden parallelen Kanälen 23, 27 ist eine zentral längsverlaufende Kabelnut 25 vorgesehen, die in ihrem Querschnitt dem Querschnitt des Kabels 29 angepasst ist. Das Kabel 29 dient zur Stromzuführung des Elektromotors 4. Innerhalb des Kabels 29 können weitere Adern vorhanden sein, die zur Übertragung von Sensor- oder Steuerungssignalen dienen. Die Tiefe der Kabelnut 25 entspricht dem Durchmesser des Kabels 29. Zur besseren Halterung des Kabels 29 ist die den Kanal 25 bildende Nut hinterschnitten ausgebildet.

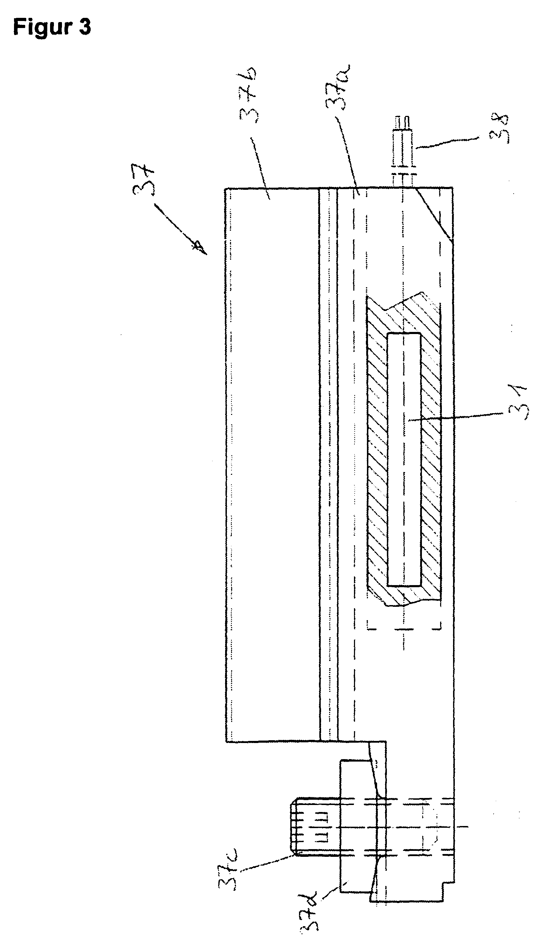

Der Kanal 25 dient außerdem zur Aufnahme eines oder mehrerer Reedschalter, d.h. Aufnahme der betreffenden elektrischen Schalterelemente der Reedschalter. Es sind hierfür Halterungsglieder 37 vorgesehen, in denen jeweils ein elektrisches Schalterelement 31 des Reedschalters angeordnet ist. Das in **Figur 3** dargestellte Halterungsglied weist einen Schalteraufnahmeabschnitt 37a auf, der in dem Kanal 25 angeordnet ist. Dieser Schalteraufnahmeabschnitt 37a ist im Querschnitt komplementär zu der hinterschnittenen Querschnittsform des Kanals 25. Der Halterungsabschnitt 37a enthält in einem inneren Hohlraum das elektrische Schalterelement 31 des Reedschalters. An einem Stirnende des Halterungselements 37 ist das elektrische Zuleitungskabel 38 herausgeführt. Am anderen Stirnende des Halterungsglieds 37 ist eine Klemmeinrichtung mit einer Klemmschraube 37c und einer Klemmmutter 37d angeordnet. Die Klemmschraube 37c ist in einer Gewindebohrung in dem Halterungsglied 37 eingeschraubt. Zur Fixierung des Halterungsglieds 37 wird die Klemmmutter 37d auf der Klemmschraube 37c in eine Winkelstellung gedreht, in der der Randbereich der Klemmmutter 37d hinter die Hinterschneidung der Stegränder des Kanals 25 greift. Das Halterungsglied 37 weist einen oberen Abschnitt 37b auf, der aus dem Kanal 25 heraus nach oben übersteht. Dieser obere Abschnitt 37b ist im Querschnitt C-förmig und dient zur Aufnahme des elektrischen Zuleitungskabels 27 des Motors 4. Das elektrische Zuleitungskabel 29 ist zwischen den C-Schenkeln angeordnet. Die C-Schenkel sind elastisch, so dass das Kabel 29 darin formschlüssig gehalten wird. Das Kabel 29 wird in seinen übrigen Abschnitten entlang des Antriebsgehäuses 3 in dem Kanal 25 geführt. Lediglich in den Abschnitten, in denen das Halterungsglied 37 angeordnet ist, ist das Kabel 29 aus dem Kanal heraus und über das Halterungselement 37 in dem oberen Halterungsabschnitt 37b geführt.

Zur Justierung der Position des Reedschalters wird die Position des Halterungsglieds 37 in dem Kanal 25 entsprechend eingestellt. Dies erfolgt bei gelöster Klemmverbindung 37d, 37c durch Verschieben des Halterungsglieds 37. Die Fixierung des Halterungsglieds 37 erfolgt sodann über die Klemmverbindung mit Klemmmutter 37d und Klemmschraube 37c.

Das Halterungsglied 37 kann ohne weiteres nachträglich eingebaut werden und somit der Antrieb 2 also mit einem oder mehreren Reedschaltern nachgerüstet werden. Das Halterungselement 37 enthält lediglich das elektrische Schalterelement 31, d.h. den Reedschalter. Diese elektrischen Schalterelemente 31 wirken mit dem als Permanentmagnet ausgebildeten Schalterelement 33 zusammen, das bei dem dargestellten Ausführungsbeispiel in der Spindelmutter 9 angeordnet ist und bereits bei der Herstellung des Antriebs 2 eingebaut wird.

Bei der Öffnungs- oder Schließbewegung des Flügels passiert das innenliegende Schalterelement 33 die Position des außenliegenden elektrischen Schalterelements 31. Das elektrische Schalterelement 31 ist über das elektrische Kabel 38 mit dem Motor 4 oder einer Steuerungseinrichtung des Motors verbunden. Bei Annäherung der beiden Schalterelemente 31, 33 wird ein Kontakt geschlossen bzw. geöffnet oder ein Schaltsignal erzeugt. Die Schalterelemente 31, 33 können einen Endschalter bilden, der den Elektromotor 4 bei einer bestimmten Ausfahrposition abschaltet. In diesem Fall hat die Anordnung die Funktion einer Hubbegrenzungseinrichtung. Es ist auch möglich, mit dem Schalter 31, 33 das Erreichen bestimmter einstellbarer Ausfahrpositionen zu signalisieren und auf diese Weise eine Positionsanzeigeeinrichtung zu schaffen.

Die Positionen können entweder in der Nähe des Flügels über Anzeigeeinrichtungen, z.B. LED-Anzeigen, angezeigt werden oder entfernt vom Antrieb 2 zu einer Gebäudeleitzentrale übertragen werden. In der Nähe des Antriebs 2 können Feuer- oder Lüftungstasten angeordnet sein.

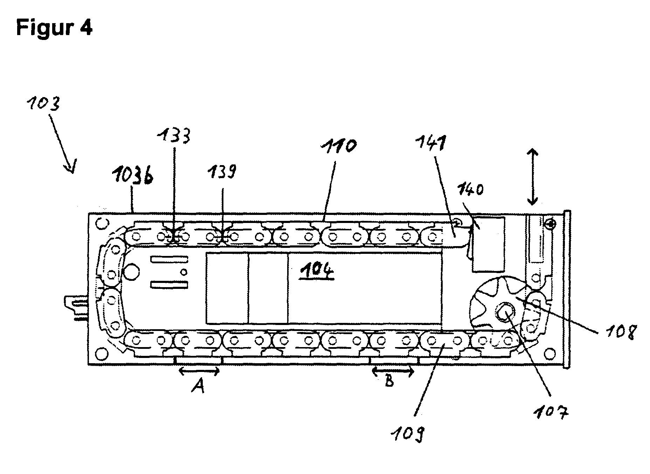

Bei dem Ausführungsbeispiel in **Figur 4** handelt es sich um einen sogenannten Kettenantrieb. Dieser weist in einem Antriebsgehäuse 103 einen Elektromotor 104 auf, der als Getriebemotor ausgebildet ist, wobei die Abtriebswelle 107 ein drehfest darauf angeordnetes Ritzel 1 08 aufweist, welches mit einer Kette 109 kämmt. Die Kette 109 bildet das Schubabtriebsglied des Motors 104. Sie ist in einer in dem Antriebsgehäuse 103 ausgebildeten Kettenführung 110 verschiebbar gelagert, wobei am abtriebsseitigen Stirnende des Antriebsgehäuses 103 die Kette 109 linear austritt. Die Kettenführung 110 ist in den beiden Gehäusehälften 103a, 103b ausgebildet. Wenn die Gehäusehälften 103a, 103b zusammengefügt sind, ist die Kettenführung 110 als Kanal ausgebildet, der im Querschnitt dem Kettenquerschnitt komplementär entspricht. Innerhalb des Gehäuses 103 ist der Kettenführungskanal 110 in Form einer im wesentlichen rechteckigen Schleife mit Austrittöffnung am abtriebsseitigen Ende des Antriebsgehäuses 103 ausgebildet. Der Kettenführungskanal 110 ist um den im Zentrum des Antriebsgehäuses 103 angeordneten Elektromotor 104 herumgeführt.

Es sind zwei Reedschaller vorgesehen, bestehend jeweils aus einem elektrischen Reedschalterelement 131 und einem Permanentmagnet-Schalterelement 133. Die beiden Reedschalterelemente 131 sind in dem Kettenführungskanal 110 in den Positionen A und B angeordnet. Den Reedschalterelementen in Position A und B ist ein in der Kette 109 angeordnetes Schalterelement 133 zugeordnet. Dieses als Permanentmagnet ausgebildete Schalterelement 133 ist in der Kette 109 durch Einstecken fixiert, wobei der Permanentmagnet in einen Lückenraum in einer Lücke innerhalb eines Kettenglieds eingesteckt ist. Der Permanentmagnet ist in seiner Formgebung entsprechend komplementär zu dem Lückenraum ausgebildet. Ein oder mehrere Kettenglieder vor dem Kettenglied, in dem der Permanentmagnet angeordnet ist, ist eine entsprechend geformtes Metalleinsteckglied 139 angeordnet zur mechanischen Blockierung des Ritzels 108 für den Fall eines Ausfalls des Reedschalters 131.

Am gehäuseseitigen Kettenende ist ein Betätigungsglied zur Betätigung eines im Gehäuse 103 in der Schließposition der Kette 109 angeordneten Endschalters angeordnet. Der Endschalter ist als mechanisch betätigbarer Mikroschalter 140 ausgebildet. Das Betätigungsglied am Ende der Kette 109 ist als Betätigungsanschlag 141 ausgebildet.

Die beiden Reedschalter 131 sind über eine manuell betätigbare Steuereinrichtung ein- / ausschaltbar. Je nachdem, welcher der Reedschalter 131 wirksam geschaltet ist, erfolgt ein Abschalten des Motors 104, wenn das Permanentmagnetglied 133 das jeweils wirksam geschaltete Reedschalterelement 131 passiert. Zusätzlich kann die Einstellung der Schaltposition durch Einstellung der Position des Permanentmagnetglieds 133 entlang der Kette 109 variiert werden. Es erfolgt damit eine je nach eingestellter Position des Permanentmagnetglieds 133 und Wirkstellung des Reedschalterelements 131 entsprechende Abschaltung des Motors 104 und damit eine Hubbegrenzung.

Die Einstellung des Permanentmagnetglieds 133 entlang der Kette 109 erfolgt, indem dieses bei der Fertigung oder vor Ort nach Öffnen des Antriebsgehäuses 103 in einen Lückenraum entlang der Kette 109 entsprechend positioniert wird. Das mechanische Blockierglied 139 wird jeweils so positioniert, dass bei einem Ausfall des Reedschalters 131 eine mechanische Blockierung des Abtriebsritzels 108 erfolgt und somit auf diese mechanische Weise Hubbegrenzung erfolgt. Durch Betätigung des Mikroschalters 140 in der Endschaltung der Kette 109 bei Schließstellung des Flügels erfolgt die Abschaltung des Motors 104 in der Schließstellung des Flügels.

### Liste der Bezugszeichen

- 2: Antrieb
- 3: Antriebsgehäuse
- 4: Elektromotor
- 5: Schubstange
- 7: Abtriebswelle
- 8: Spindel
- 9: Spindelmutter
- 16: Kupplungsbuchse
- 19: Schiebelager
- 21: Anschlagscheibe
- 23: Nut
- 25: Kabelnut
- 27: Nut
- 29: Kabel
- 31: erstes Schalterelement
- 33: zweites Schalterelement
- 35: Klemmverbindung
- 37: Halterung
- 37a: Schalteraufnahmeabschnitt
- 37b: oberer Halterungsabschnitt
- 37c: Klemmschraube
- 37d: Klemmmutter
- 38: Zuleitungskabel
- 43: Schenkel
- 45: Schenkel
- 47: Außenseite der Halterung 37
- 49: Außenseite der Nut 27
- 51: Bohrung
- 53: Schraube
- 55: Klemmstück
- 57: Oberseite des Klemmstücks 55
- 59: Innenfläche der Nut 27
- 103: Antriebsgehäuse
- 103a: Gehäusehälfte
- 103b: Gehäusehälfte
- 104: Elektromotor
- 105: Schubstange
- 107: Abtriebswelle
- 108: Ritzel
- 109: Kette
- 110: Kettenführung
- 131: erstes Schalterelement
- 133: zweites Schalterelement
- 139: Blockierglied
- 140: Mikroschalter
- 141: Betätigungsanschlag

## Patentansprüche

1. Elektrischer Antrieb (2) für einen an einem ortsfesten Rahmen gelagerten Flügel, insbesondere Kipp- oder Klappflügel, zum Beispiel in einer Lüftungsanlage, Rauch- und Wärmeabzugsanlage oder dergleichen,
mit einem Antriebsgehäuse (3, 103), in welchem ein elektrischer Motor (4, 104) mit Schubabtriebsglied (5, 109) gelagert ist,
wobei das Antriebsgehäuse (3, 103) am Flügel oder am ortsfesten Rahmen abgestützt ist und das Schubabtriebsglied (5, 109) am ortsfesten Rahmen bzw. am Flügel abgestützt ist,
**dadurch gekennzeichnet**,
dass ein Schalter vorgesehen ist, der ein erstes Schalterelement (31, 131) aufweist, das über eine elektrische Verbindung mit dem Motor (4, 104) oder einer mit dem Motor (4, 104) verbundenen elektrischen Steuerungseinrichtung verbunden ist, und ein zweites Schalterelement (33, 133) aufweist, das mit dem ersten Schalterelement (31, 131) zusammenwirkt,
wobei das erste Schalterelement (31, 131) am oder in dem Antriebsgehäuse (3, 103) anbringbar ist und das zweite Schalterelement (33, 133) an oder in dem Schubabtriebsglied (5, 109) oder einem mit dem Schubabtriebsglied (5, 109) verbundenen Teil angeordnet ist oder umgekehrt.

2. Antrieb nach Anspruch 1,
**dadurch gekennzeichnet**, dass das erste Schalterelement (31, 131) in seiner Position relativ zum Antriebsgehäuse (3, 103) variabel einstellbar ist.

3. Antrieb nach einem der vorangehenden Ansprüche,
**dadurch gekennzeichnet**, dass das zweite Schalterelement (133) in seiner Position relativ zum Schubabtriebsglied (109) variabel einstellbar ist.

4. Antrieb nach Anspruch 2 oder 3,
**dadurch gekennzeichnet**, dass das erste Schalterelement (131) bzw. das zweite Schalterelement (133) in seiner Position stufenlos variabel einstellbar ist.

5. Antrieb nach einem der vorangehenden Ansprüche,
**dadurch gekennzeichnet**, dass der Schalter als berührungslos arbeitender Schalter ausgebildet ist, indem das erste Schalterelement (31, 131) mit dem zweiten Schalterelement (33, 133) berührungslos arbeitend ausgebildet sind.

6. Antrieb nach Anspruch 5,
**dadurch gekennzeichnet**, dass der berührungslos arbeitende Schalter als erstes Schalterelement (31, 131) eine Reedelement und als zweites Schalterelement (33, 133) einen Permanentmagneten aufweist oder als erstes Schalterelement (31, 131) ein Hallelement und als zweites Schalterelement (33, 133) einen Permanentmagneten aufweist oder als erstes Schalterelement (31, 131) eine Feldplatte und als zweites Schalterelement (33, 133) einen Permanentmagneten aufweist.

7. Antrieb nach einem der Ansprüche 1 bis 4,
**dadurch gekennzeichnet**, dass der Schalter als berührend arbeitender Schalter ausgebildet ist, indem das erste Schalterelement (31, 131) als elektrisches Schalterelement und das zweite Schalterelement (33, 133) als mechanisches Betätigungselement ausgebildet ist, die miteinander in Anschlaglage bringbar sind.

8. Antrieb nach einem der vorangehenden Ansprüche,
**dadurch gekennzeichnet**, dass an oder in dem Schubabtriebsglied (109) eine Befestigungsvorrichtung für das erste Schalterelement (131) oder das zweite Schalterelement (133), vorzugsweise für das zweite Schalterelement (133), vorgesehen ist, wobei die Befestigungsvorrichtung mehrere entlang der Bewegungsrichtung des Schubabtriebsglieds (109) nebeneinander angeordnete Befestigungsstellen für das erste Schalterelement (131) bzw. das zweite Schalterelement (133) aufweist.

9. Antrieb nach einem der vorangehenden Ansprüche,
**dadurch gekennzeichnet**, dass an oder in dem Antriebsgehäuse (3) eine Befestigungsvorrichtung (25, 37) für das erste Schalterelement (31) oder das zweite Schalterelement (33) vorgesehen ist, wobei die Befestigungsvorrichtung (25) mehrere entlang der Bewegungsrichtung des Schubabtriebsglieds (5) nebeneinander angeordnete Befestigungsstellen für das erste Schalterelement (31) bzw. das zweite Schalterelement (33) aufweist.

10. Antrieb nach Anspruch 9,
**dadurch gekennzeichnet**, dass die Befestigungsvorrichtung (25, 37) an der Außenseite des Antriebsgehäuses (3) angeordnet ist.

11. Antrieb nach Anspruch 10,
**dadurch gekennzeichnet**, dass die Befestigungseinrichtung als eine an der Außenseite des Antriebsgehäuses (3) angeordnete Nut (25) oder Leiste ausgebildet ist, vorzugsweise einstückig mit dem Antriebsgehäuse (3) ausgebildet oder als separates Teil mit dem Antriebsgehäuse (3) verbunden ausgebildet ist.

12. Antrieb nach Anspruch 11,
**dadurch gekennzeichnet**, dass die Nut (25) als hinterschnittene Aufnahmenut ausgebildet ist, wobei vorzugsweise vorgesehen ist, dass das erste Schalterelement (31) zumindest abschnittsweise in seinem Querschnitt an dem Querschnitt der hinterschnittenen Nut ausgebildet ist.

13. Antrieb nach einem der vorangehenden Ansprüche,
**dadurch gekennzeichnet**, dass das gehäuseseitig anbringbare erste Schalterelement (31, 131) von Hand am bzw. im Antriebsgehäuse (3, 103) nachrüstbar ist und/oder von außen her am oder im Antriebsgehäuse (3, 103) positionierbar ist, bzw. in einer an der Antriebsgehäuseaußenseite angeordneten Aufnahmenut (25) positionierbar ist und/oder von außen her in seiner Position relativ zum Antriebsgehäuse (3, 103) vorzugsweise über eine von außen her betätigbare Einstellvorrichtung positionierbar ist.

14. Antrieb nach einem der vorangehenden Ansprüche,
**dadurch gekennzeichnet**, dass das Schubabtriebsglied als Schubstange (5) oder als Kette (109) ausgebildet ist.

15. Antrieb nach Anspruch 14,
**dadurch gekennzeichnet**, dass das zweite Schalterelement (33) in oder an einer Spindelmutter (9) angeordnet ist, die auf einer vom Motor (4) angetriebenen Spindel (8) linear geführt ist und mit dem Schubabtriebsglied (5) verbunden ist.

16. Antrieb nach Anspruch 14,
**dadurch gekennzeichnet**, dass das zweite Schalterelement (133) an oder in der als Schubabtriebsglied ausgebildeten Kette (109) angeordnet ist, vorzugsweise innerhalb eines Kettengliedes oder zwischen zwei Kettengliedern angeordnet ist.

17. Antrieb nach Anspruch 16, **dadurch gekennzeichnet**, dass das zweite Schalterele
ment (133) in oder an der Kette (109) lösbar, vorzugsweise steckbar, verbunden angeordnet ist.

18. Antrieb nach einem der vorangehenden Ansprüche, **dadurch gekennzeichnet**, dass in dem Antriebsgehäuse
(3, 103) entlang der Bewegungsrichtung des Schubabtriebsglieds (5, 109) mehrere erste Schalterelemente (31, 131) angeordnet sind oder an oder in dem Schubabtriebsglied (5, 109) ein zweites Schalterelement (33, 133) angeordnet ist.

19. Antrieb nach Anspruch 18,
**dadurch gekennzeichnet**, dass eine elektrisch oder manuell betätigbare mechanische Steuerungsvorrichtung vorgesehen ist, die mit den mehreren ersten Schalterelementen (31, 131) zusammenwirkt.

20. Antrieb nach einem der vorangehenden Ansprüche,
**dadurch gekennzeichnet**, dass der Schalter (31, 33, 131, 133) als Hubbegrenzungseinrichtung oder als Bestandteil einer Hubbegrenzungseinrichtung ausgebildet ist.

21. Antrieb nach einem der vorangehenden Ansprüche,
**dadurch gekennzeichnet**, dass der Schalter (31, 33, 131, 133) als Positionsanzeigeeinrichtung oder als Bestandteil einer Positionsanzeigeeinrichtung ausgebildet ist.

22. Antrieb nach Anspruch 21, **dadurch gekennzeichnet**, dass die Positionsanzeigeein
richtung entfernt vom Antriebsmotor (4, 104) in einer Steuerungszentrale oder Gebäudeleitzentrale angeordnet ist.

23. Antrieb nach einem der vorangehenden Ansprüche, **dadurch gekennzeichnet**, dass ein Schalter (31, 33, 131,
133) dem Öffnungsvorgang und ein Schalter dem Schließvorgang zugeordnet ist.
